# EUROPEAN PATENT SPECIFICATION

(11) **EP 4 578 785 B1**
(45) Date of publication and mention of the grant of the patent: **25.02.2026**
(21) Application number: 23220515.3
(22) Date of filing: 28.12.2023
(51) Int. Cl.: B64C 27/78, B64C 27/82

(54) **ROTOR FOR AN AIRCRAFT CAPABLE OF HOVERING AND METHOD OF ADJUSTMENT OF ROTOR BLADE ANGLE PITCH**
ROTOR FÜR EIN SCHWEBEÄHIGES FLUGZEUG UND VERFAHREN ZUR EINSTELLUNG DER ROTORBLATTWINKEL
ROTOR POUR AÉRONEF APTE AU VOL STATIONNAIRE ET PROCÉDÉ DE RÉGLAGE DU PAS DE PALE DE ROTOR

(43) Date of publication of application: 02.07.2025
(73) Proprietor: Leonardo S.p.a., 00195 Roma (IT)
(72) Inventor: NOVEMBRINI, Giovanni, 21017 Samarate (VA) (IT); DELLI PAOLI, Michele, 21017 Samarate (VA) (IT); ZACCARIA, Alessio, 21017 Samarate (VA) (IT); MANENTI, Giuseppe, 21017 Samarate (VA) (IT); NESCI, Andrea, 21017 Samarate (VA) (IT); BRUNETTI, Massimo, 21017 Samarate (VA) (IT)
(74) Representative: Studio Torta S.p.A.

(56) References cited:
- EP-A1- 2 982 604
- US-A- 5 749 540
- US-A1- 2016 059 960
- US-B1- 11 554 860

## Description

The present invention relates to a rotor for an aircraft capable of hovering.

The present invention also relates to a method for adjusting the angle of attack of the blades of the aforementioned rotor.

In particular, the rotor is an anti-torque rotor of a helicopter.

Helicopters are known comprising:
- a fuselage;
- a main rotor adapted to generate the lift necessary for supporting and manoeuvring the helicopter, and generating, following its operation, a reaction torque on the fuselage; and
- an anti-torque rotor adapted to generate a thrust and, therefore, a counter torque which balances the reaction torque generated on the fuselage by the main rotor.

In the traditional solutions, helicopters comprise one or more turbines operatively connected to the main rotor by means of a transmission assembly.

The anti-torque rotor comprises, in a known manner:
- an output shaft driven into rotation around a first axis by a gear chain of the transmission assembly;
- a plurality of articulated blades with variable angles of attack on the output shaft; and
- a controlling element operable for varying the angle of attack of the aforementioned blades and consequently adjusting the thrust value generated by the rotor.

In the solutions of known type, the controlling element essentially comprises:
- a rod slidable along the first axis of the output shaft with respect to the output shaft and rotatable around the aforementioned first axis integrally with the output shaft and the blades;
- a ring integral with the control rod and axially spaced apart from the hub; and
- a plurality of levers hinged, at respective ends opposite one another, to the ring and to respective blades in a position eccentric to second longitudinal extension axes of the respective blades.

Very briefly, the sliding of the rod varies the inclination of the levers with respect to the first axis and consequently adjusts the angles of attack of the corresponding blades.

Each blade further comprises, for a predetermined direction of rotation, a more forward leading edge and a more backward trailing edge.

Recently, anti-torque systems formed by a plurality of electrically operated rotors have been introduced, for example by patent application EP-A-3501983 by the Applicant.

More specifically, the output shaft of each aforementioned rotor is operated by a respective electric motor with a rotational speed selectively adjustable in a manner independent of the operating conditions of the main rotor.

In order to simplify the manufacturing of the rotor, the blades are mounted on the respective output shafts with fixed angles of attack, so as not to require the presence of the connection member.

Consequently, the part of reaction torque generated by each rotor is adjustable exclusively by acting on the rotational speed of the relative output shaft.

The need is felt in the sector to be able to quickly adjust the counter torque generated by each anti-torque rotor without varying the rotational speed of the relative output shaft for a substantial time interval while maintaining the greatest simplicity possible with regard to the manufacturing of the rotor.

In fact, for a given thrust generated by the anti-torque rotor, the reduction in the rotational speed of the relative output shaft determines a reduction in the external noise or an increase in the passband.

On the contrary, the increase in the rotational speed of the output shaft reduces the energy lost by Joule effect proportional to the ratio between torque generated and current absorbed by the rotor, and improves the cooling of the rotor.

Moreover, the rotors with fixed angles of attack of the blades require inverting the direction of rotation of the output shaft in order to invert the direction of the thrust and, therefore, of the counter torque generated by the anti-torque rotor.

Such inversion of the direction of rotation of the output shaft determines, in the solution with fixed angles of attack, the exchange between the leading and trailing edges of the blades.

It is thus impossible to optimize the shape and the aerodynamic characteristics of the leading and trailing edges for each operating condition of the rotor.

The same need is also felt with regard to the rotors of electrically propelled convertiplanes and to the rotors of electrically propelled multi-rotor aircrafts.

Very briefly, convertiplanes are capable of assuming:
- an "airplane" configuration, in which the rotors are arranged with respective axes substantially parallel to a longitudinal axis of the convertiplane; or
- a "helicopter" configuration, in which the rotors are arranged with the respective axes substantially vertical and transversal to the aforementioned longitudinal axis of the convertiplane.

Whereas, the aircrafts with multiple rotors comprise a plurality of rotors, some of which with respective first fixed axes and some of which with respective inclinable axes, so as to be able to assume both the "airplane" configuration and the "helicopter" configuration.

US-A-2016/059960 discloses a rotorcraft rotor head comprising: (i) two or more rotor blades attached to rotate about a rotor axis, and pivot through a flapping and/or teetering hinge, and having a pitch angle; (ii) pitch angle changing means for collectively changing said pitch angle; (iii) centrifugal pitch stop mechanism having an activation point and comprising one or more centrifugal plates; and (iv) control means for providing a control input to said pitch angle changing means; wherein said centrifugal pitch stop mechanism is configured to attain an activated state and to interact with said pitch angle changing means; wherein the activated state is attained when the rotational speed of the rotor blades is greater than said activation point and when a control input is provided by the control means; and wherein the activation point is less than the minimum rotational speed of the rotor blades that is required for flying the rotorcraft.

US-B-11554860 discloses a compound aircraft with a convertible thruster that pivots between an anti-torque position, a forward thrust position, and intermediate positions. A pilot has two inceptors to control thruster rotor pitch in the anti-torque and forward thrust positions. A mixer mechanically blends the signals from the two inceptors during transition between the anti-torque and forward thrust positions. A transfer rod coaxial with the pivot axis of the convertible thruster conveys convertible thruster pitch commands from the pilot to a pitch control actuator. The pitch control actuator may be located partially within the rotor of an electric motor that rotates the convertible thruster rotor. The electric motor and pitch control actuator are unitary. Both the electric motor and pitch control actuator pivot with the convertible thruster. The pitch actuator output shaft is coaxial to and disposed within a hollow electric motor output shaft.

EP-A-2982604 discloses an anti-torque rotor of a helicopter, having: a supporting body; a drive shaft which rotates about a first axis with respect to the supporting body; a hub connected operatively to drive shaft and angularly fixed with respect to first axis; at least one blade which is connected operatively to hub, is angularly fixed with respect to first axis, and is angularly movable with respect to a second axis to adjust the pitch angle of blade; and an actuator which can be operated to rotate blade about second axis to adjust the pitch angle of blade; actuator has an electric motor which generates torque along the first axis; and a mechanical stage interposed between the electric motor and blade, and designed to convert the torque into rotation of blade about the respective second axes; electric motor is fixed to supporting body.

US-A-5,749,540 discloses a device for stabilizing yaw motion through the use of a tail rotor with a plurality of rotor blades extending radially from a hollow rotor shaft which is mounted for rotation about a transverse rotor axis. The tail rotor is provided with a device for varying the thrust by a pilot input to the blades of the tail rotor and through the use of a gyro rotor for automatic control of the tail rotor. The invention further comprises a three point mixing linkage that permits the control of the tail rotor through both the pilot inputs and the gyro rotor input

The object of the present invention is to manufacture a rotor for an aircraft capable of hovering, which allows satisfying at least one of the above-specified needs in a simple and cost-effective manner.

According to the invention, this object is achieved by a rotor for an aircraft capable of hovering, comprising a plurality of blades, as claimed in claim 1.

The present invention also relates to a method for adjusting the angle of attack of the blades of a rotor of an aircraft capable of hovering, according to what is claimed in claim 11.

In order to better understand the present invention, two preferred non-limiting embodiments thereof are described in the following, by way of mere example and with the aid of the accompanying drawings, wherein:
- Figure 1 is a perspective view of a helicopter with a plurality of rotors manufactured according to the teachings of the present invention;
- Figure 2 is a perspective view according to a first visual angle of the rotor of Figure 1 on a greatly enlarged scale;
- Figure 3 is a perspective view according to a further visual angle of the rotor of Figure 2, with parts removed for clarity;
- Figure 4 is a partial section along line IV-IV of Figure 3 of some details of the rotor of Figures 2 to 3 in a first operating position;
- Figure 5 illustrates on an enlarged scale some details of Figure 4;
- Figure 6 illustrates on a still further enlarged scale and in section along line IV-IV of Figure 2 some details of the rotor of Figures 2 and 3 in a second operating position;
- Figure 7 is an exploded view of the rotor of Figures 2 to 6, with parts not illustrated for clarity;
- Figure 8 illustrates on a still further enlarged scale some details of the rotor of Figures 2 to 7;
- Figure 9 is a perspective view of a rotor according to a different embodiment of the invention;
- Figure 10 is a section along line X-X of Figure 9;
- Figure 11 illustrates further details of the rotor of Figures 9 and 10; and
- Figure 12 qualitatively illustrates the time trend of some parameters of the rotor of Figures 1 to 11.

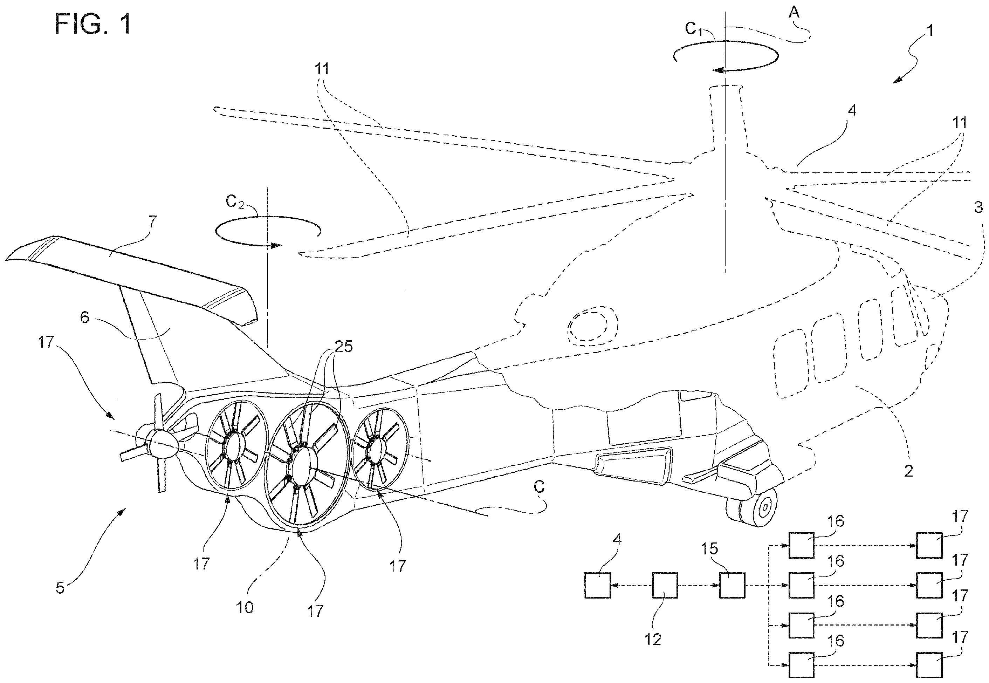

With reference to Figure 1, reference numeral 1 indicates a helicopter.

The helicopter 1 essentially comprises:
- a fuselage 2 with a nose 3 arranged at the front;
- a drive unit 12 (only schematically illustrated in Figure 1);
- a main rotor 4 provided with a plurality of blades 11 placed at the top of the fuselage 2, operated by the drive unit 12 and rotatable around an axis A;
- a tail portion 5 arranged on the opposite side of the fuselage 2 with respect to the nose 3 and comprising a fin 6 and a tailplane 7 protruding cantilevered from both sides of the fin 6; and
- an anti-torque system 10 carried by the tail portion 5.

As is known, the operation of the rotor 4 allows adjusting the lift acting on the helicopter 1 and consequently varying the altitude of the helicopter 1.

In a known manner, the blades 11 are articulated so as to be able to vary the inclination of the rotor disc, i.e. of the ideal disc defined by the free ends of the blades 11 opposite the axis A.

In such manner, the rotor 4 controls the forward/backward movement and the lateral shifting of the helicopter 1.

The rotation of the blades 11 around the axis A determines the application of a first torque C1 on the fuselage 2. Such first torque C1 would tend to determine the rotation of the helicopter 1 around the axis A.

The anti-torque system 10 is provided for generating a second torque C2 of adjustable modulus and having a main component with a direction opposite the first torque C1, so as to be able to adjust the yaw angle of the helicopter **1.**

When the main component of such second torque C2 is of modulus equal to the first torque C1, the anti-torque system 10 prevents the rotation of the helicopter 1 around a yaw axis substantially parallel to the axis A and passing through the centre of gravity of the helicopter **1.**

When the main component of such second torque C2 is of modulus smaller or greater than the first torque C1, the anti-torque system 10 determines a variation of the yaw angle of the helicopter 1, i.e. the rotation of the helicopter 1 with respect to the yaw axis.

In some manoeuvres to be performed in a particularly quick time, the anti-torque system 10 generates a second torque C2 in accordance with the first torque C1, so as to quickly rotate the helicopter 1 in the same direction of the first torque C1.

The anti-torque system 10 comprises (Figure 1):
- an electric power supply unit 15 (only schematically illustrated);
- a plurality of electric motors 16 (only schematically illustrated) operated by the unit 15; and
- a plurality of rotors 17 operatively connected to respective motors 16 and operated by the motors 16.

The unit 15 could comprise an electric energy generator operatively connected to the drive unit 12, could comprise a plurality of batteries, or could be any electric energy source whatsoever.

In particular, the unit 15 and the rotors 17 could be connected so as to allow a bidirectional flow of electric energy/power.

In the following, one single rotor 17 is described with reference to the relative motor 16, being the rotors 17 and the respective motors 16 identical to one another.

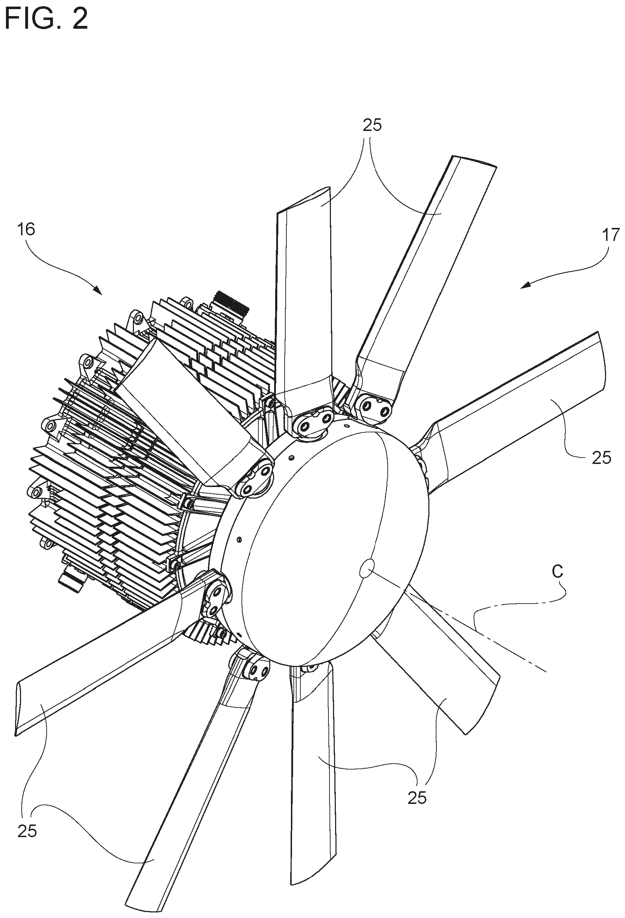

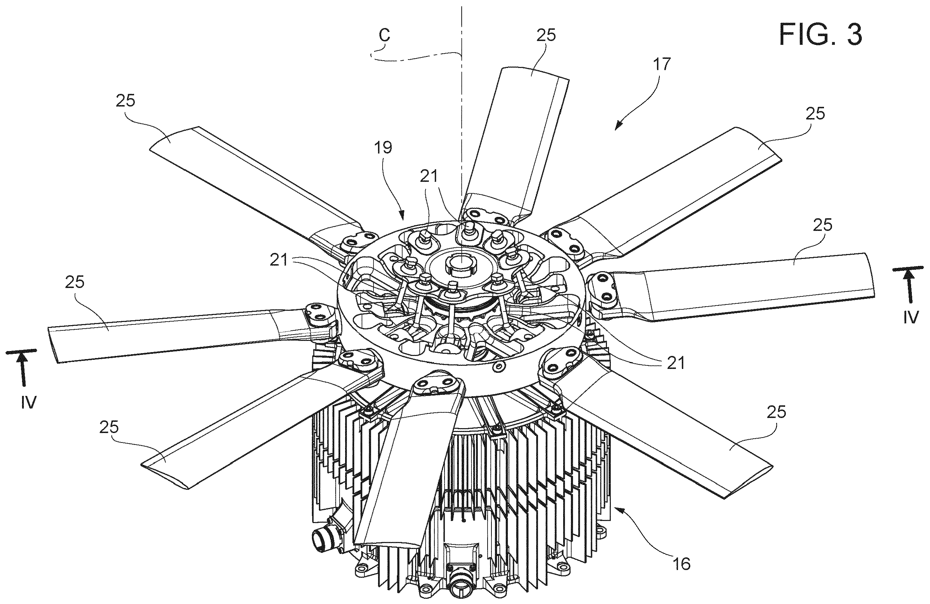

With reference to Figures 2 to 8, the rotor 17 essentially comprises, in turn:
- a shaft 18 rotatable around an axis C and coming out of the motor 16;
- a hub 19 rotatable around the axis C, coupled to the shaft 18 and on which a plurality, eight in the illustrated case, of blades 25 are articulated extending along respective axes D transversal to the axis C; and
- a controlling element 20 also rotatable around the axis C.

In the following of the present description, the term "hub" means a component of the rotor 17 rotatable around the axis C integrally with the blades 25 in every operating condition of the rotor 17.

The shaft 18 is driven into rotation by the motor 16 with an acceleration a of adjustable modulus.

The controlling element 20 is spaced apart from the hub 19 parallel to the axis C.

The rotor 17 further comprises:
- a plurality of connection members 21 hinged to the controlling element 20 and to respective blades 25 around axes parallel to one another; and
- constraining means 23 adapted to constrain the hub 19 and the controlling element 20 to one another.

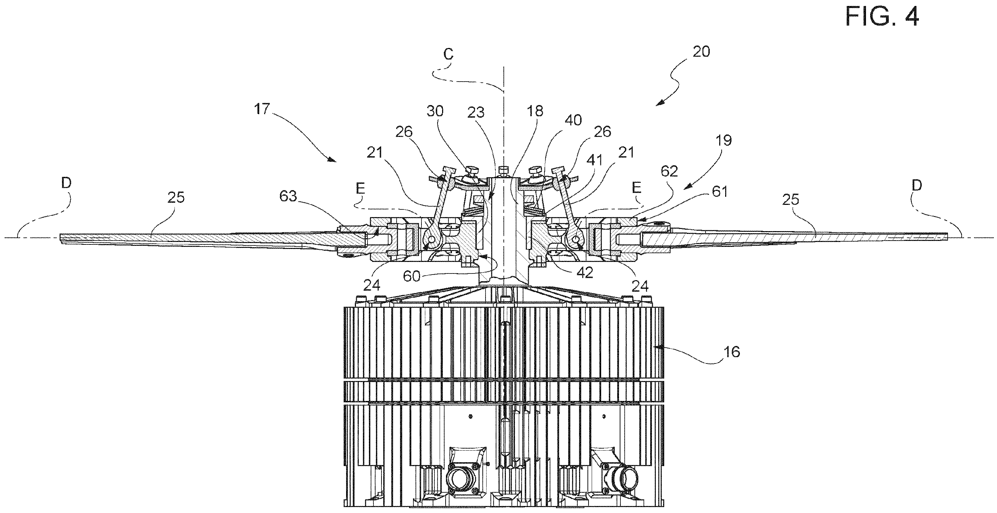

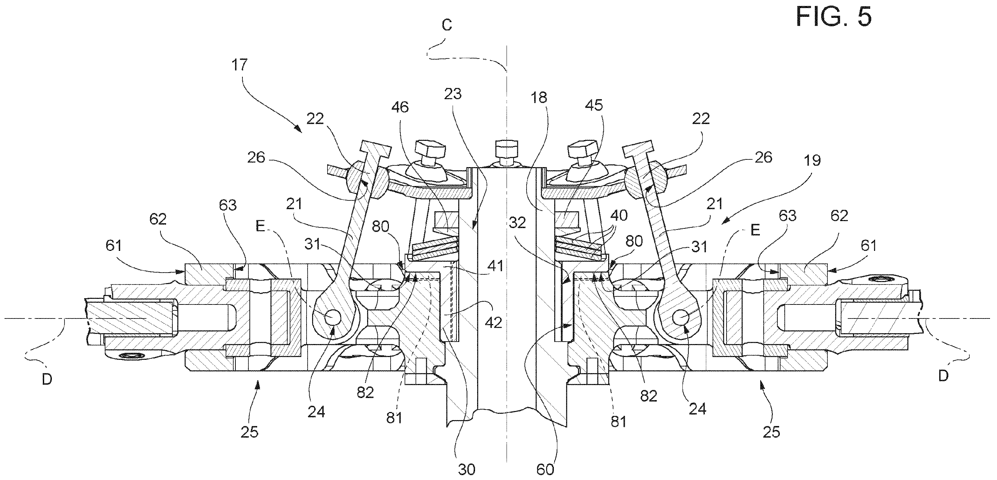

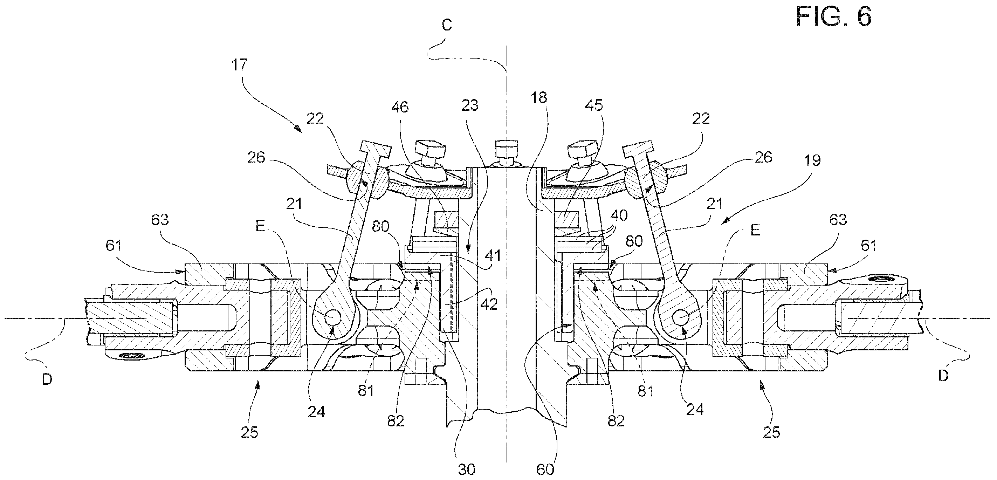

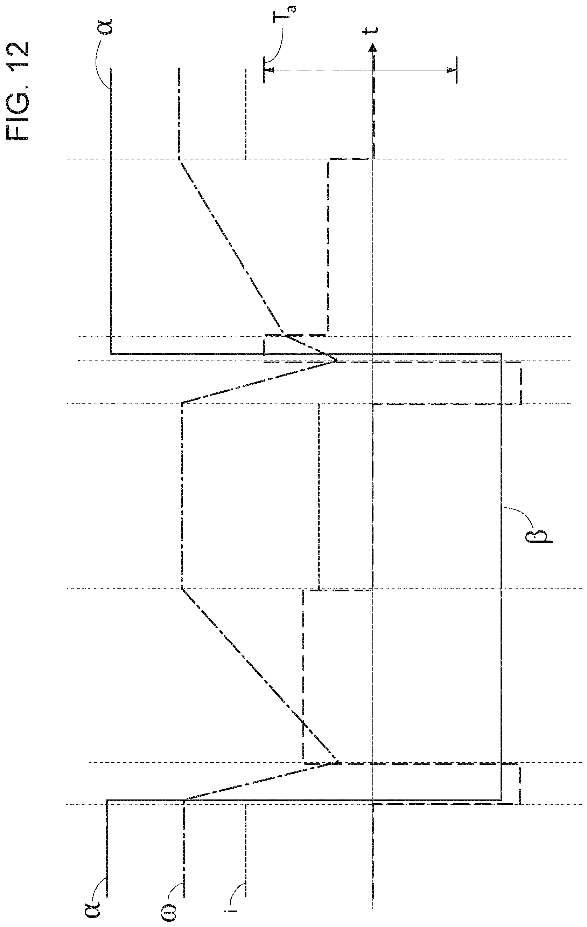

Advantageously, the connection members 21 are operable for determining the rotation of the blades 25 around the respective axes D, so as to adjust the respective angles of attack α, β, γ (Figure 12);
the constraining means 23 are configured to:
- keep the controlling element 20 and hub 19 angularly integral with one another around the axis C and in a first relative position (Figures 4 and 5) with respect to one another, when the absolute value of the acceleration a of the electric motor 16 is smaller than a threshold value Ta, so that the angles of attack α, β, γ assume respective first values α;
- keep the controlling element 20 and hub 19 angularly integral with one another around the axis C and in a second relative position (Figure 6) with respect to one another, when the absolute value of the acceleration a of the electric motor 16 is greater than a threshold value Ta, so that the angles of attack α, β, γ assume respective second values β; and
- allow the relative rotation between the controlling element 20 and hub 19 between the aforementioned first and second positions when the absolute value of the acceleration a reaches the threshold value Ta.

More specifically, the connection members 21 are rods each having:
- an end 22 slidable inside a respective seat 26 of the controlling element 20; and
- an end 24 opposite the end 22 hinged to the relative blade 25 around an axis E eccentric with respect to the axis D of the relative blade 25.

The rotation of the hub 19 relative to the controlling element 20 around the axis C determines the rotation of the blades 25 around the relative axes D and the consequent variation of the angle of attack α, β, γ of the blades 25 between the aforementioned first value α, second value β and a third value γ not illustrated in Figure 12.

With reference to Figures 4 and 5, the shaft 18 is angularly integral with the controlling element 20.

The hub 19 has a first moment of inertia around the axis C greater than a second moment of inertia around the axis C of the controlling element 20.

Consequently, when the absolute value of the acceleration a reaches the threshold value Ta, in case of rotation in the first (second) direction of the output shaft 18, the inertia torque acting on the hub 19 tends to determine a relative rotation resulting in a backward movement of the hub 19 with respect to the output shaft 18 with reference to the first (second) direction of rotation for an observer integral with the fuselage 2 and, therefore, rotationally fixed with respect to the axis C.

Such backward movement of the hub 19 in the first (second) direction corresponds to a forward movement of the hub 19 in the second (first) direction of rotation around the axis C.

The constraining means 23 essentially comprise (Figures 4 to 8):
- a bushing 30 angularly fixed and axially movable with reference to the axis C with respect to the shaft 18, and provided with a plurality of teeth 31 with a mainly axial development; and
- a plurality of projections 35 protruding cantilevered from the hub 19 and adapted to define respective abutment surfaces for corresponding teeth 31.

More specifically, the bushing 30 is coupled to the shaft 18 by means of a grooved profile 32.

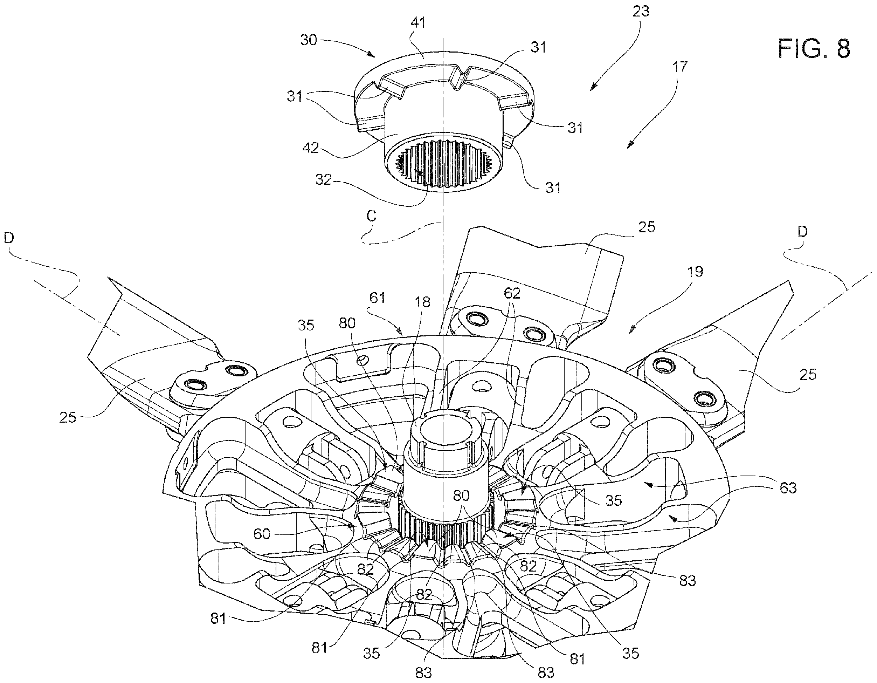

The bushing 30 comprises, in turn (Figure 8):
- a flange 41 of axial end delimiting the bushing 30 on the side of the controlling element 20 and from which a plurality, eight in the illustrated case, of teeth 31 axially protrude cantilevered towards the hub 19; and
- a tubular body 42 protruding cantilevered from the flange 41 towards the hub 19 and on the radially internal lateral surface of which the grooved profile 32 is obtained.

The rotor 17 further comprises:
- a plurality of rings 40 made of elastically deformable material and axially interposed between the bushing 30 and the shaft 18; and
- a cylindrical ring 45 and a truncated cone-shaped ring 46 fit on the shaft 18 in a position axially interposed between the controlling element 20 and the rings 40.

In particular, the rings 40 are coaxial to the axis C and axially superimposed with respect to one another.

The ring 45 is arranged on the side of the controlling element 20 and the ring 46 is arranged on the side of the rings 40.

The rings 40 are arranged in abutment against one another.

The ring 40 axially closest to the controlling element 20 is arranged in abutment against the ring 46.

The ring 40 axially closest to the bushing 30 is arranged in abutment against the flange 41.

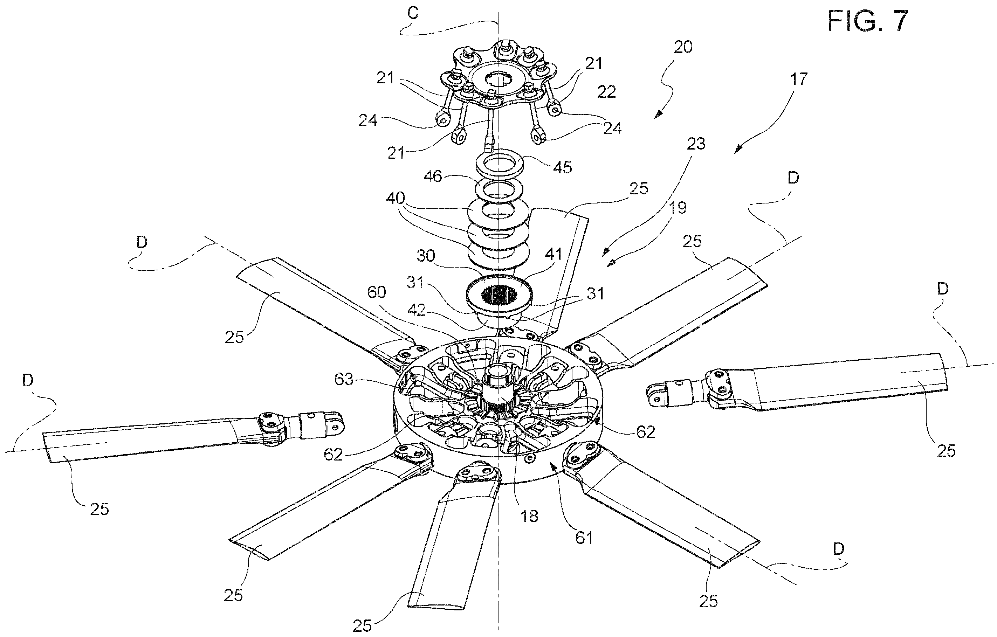

With particular reference to Figure 7, the hub 19 comprises:
- a radially internal circular rim 60 passed through by the shaft 18 and by the bushing 30;
- a radially external circular rim 61 opposite the circular rim 60 and passed through by the blades 25; and
- a plurality, eight in the illustrated case, of pairs of spokes 62, radially extending between the circular rims 60, 61 and defining respective seats 63 engaged by corresponding blades 25.

With reference to Figure 8, the projections 35 are carried by the circular rim 60.

Each projection 35 is associated with a respective blade 25 and a corresponding tooth 31.

The projections 35 are arranged in sequence with respect to one another, proceeding circumferentially around the axis C.

Each projection 35 comprises, in particular (Figure 8):
- a flat surface 80 orthogonal to the axis C; and
- three concave surfaces 81 and two convex surfaces 82 circumferentially alternated with respect to one another around the axis C.

The surface 80 is arranged at a first distance from the controlling element 20, parallel to the axis C.

The surfaces 81 are arranged at a second distance greater than said first distance from the controlling element 20, parallel to the axis C.

The surfaces 82 are arranged at a third intermediate distance between the first and second distances from the controlling element 20, parallel to the axis C.

When the absolute value of the acceleration a of the shaft 18 is smaller than the threshold value Ta, the teeth 31 of the bushing 30 are in axial abutment against the surfaces 82 of the corresponding projections 35 according to what is illustrated in Figures 4 and 5.

When the absolute value of the acceleration a is smaller than the threshold value Ta, the relative position between each axis E and the relative seat 26 of the controlling element 20 is such that the angle of attack α, β of the blades 25 assumes the first value α.

The rings 40 are elastically deformed so as to be tapered starting from the bushing 30 towards the ring 46.

More in particular, the hub 19 is driven into rotation by the torque caused by the friction existing between the surfaces 82 of the projections 35 and the corresponding teeth 31.

In such condition, the torque caused by the friction in accordance with the direction of rotation of the shaft 18 around the axis C exceeds the inertia torque acting on the hub 19 not in accordance with the aforementioned direction of rotation.

Upon the reaching of the threshold value Ta, the inertia torque exceeds the torque caused by the friction.

Consequently, the surfaces 82 move backward with respect to the respective teeth 31, and correspondingly the hub 19 moves backward with respect to the shaft 18 and the controlling element 20, with reference to the direction of rotation around the axis C.

Then, the teeth 31 of the bushing 30 axially abut against the surfaces 80 of the corresponding projections 35, according to what is illustrated in Figure 6.

In such condition, the hub 19 and the shaft 18 are again angularly integral with one another around the axis C.

When the acceleration a of the shaft 18 is greater than the threshold value Ta, the relative position between axis E and the seat 26 of the controlling element 20 is such that the angle of attack α, β, γ of the blades 25 assumes the second value β.

The rings 40 are further substantially elastically undeformed so as to be flat and orthogonal to the axis C.

Still with reference to Figures 4 and 5, in a further range of values of acceleration a of the shaft 18 not illustrated in Figure 12, the teeth 31 of the controlling element 20 are in abutment against the surfaces 81 of the respective projections 35.

In such condition, the hub 19 and the shaft 18 are again angularly integral with one another around the axis C.

In such further range, the relative position between axis E and seat 26 of the controlling element 20 is such that the angle of attack α, β, γ of the blades 25 assumes the third value γ.

Figure 12 illustrates, in an exemplifying and non-limiting manner, the time course of the acceleration a of the output shaft 18, of the value of the angle of attack α, β of the blades 25, of the instantaneous rotational speed ω of the shaft 18, of the current i supplying the electric motor 16, and threshold value Ta of the acceleration a according to a particular control law of the electric motor 15.

Without any loss of generality, the control law provides for varying the angle of attack α, β, γ of the blades 25 between the sole values α, β opposite one another.

In use, the operation of the rotor 4 allows the lifting/lowering, the forward/backward movement and the lateral shifting of the helicopter 1.

The operation of the rotor 4 generates the first torque C1 on the fuselage 2, which would determine the rotation of the helicopter 1 around the yaw axis.

The operation of the anti-torque system 10 generates a second torque C2 on the fuselage 2 in a direction opposite the first torque C1.

Such second torque C2 determines the yaw angle of the helicopter 1.

More specifically, the unit 15 controls the electric motors 16, so as to determine the rotation of the respective rotors 17 with respective directions of rotation and respective rotational speeds ω.

In such manner, the rotors 17 generate respective forces on the fuselage 2 and, therefore, the anti-torque system 10 generates the second torque C2.

The difference between the second torque C2 and the first torque C1 adjusts the yaw angle of the helicopter **1.**

The operation of the helicopter 1 is described in the following with reference to one single rotor 17 and to the relative electric motor 16.

The operation of the helicopter 1 is also described starting from a condition in which the angular speed ω of the shaft 18 is directed in the first direction, and the absolute value of the acceleration a of the shaft 18 is smaller than the threshold value Ta and the angles of attack α, β, γ of the blades 25 assume a first value α (Figure 12).

In such condition, the teeth 31 of the bushing 30 are in axial abutment against the surfaces 82 of the corresponding projections 35 according to what is illustrated in Figures 4 and 5.

The rings 40 are elastically deformed so as to be tapered starting from the bushing 30 towards the ring 46. Therefore, the rings 40 elastically load the bushing 30 and the respective teeth 31 against the surfaces 82 of the corresponding projections 35.

More in particular, the hub 19 is driven into rotation integrally with the shaft 18 by the torque caused by the friction existing between the surfaces 82 of the projections 35 and the corresponding teeth 31.

In such condition, the torque caused by the friction in accordance with the direction of rotation of the shaft 18 around the axis C exceeds the inertia torque acting on the hub 19 not in accordance with the aforementioned direction of rotation.

Upon the reaching of the threshold value Ta, the inertia torque exceeds the torque caused by the friction.

Consequently, the surfaces 82 move backward with respect to the respective teeth 31, and correspondingly the hub 19 moves backward with respect to the shaft 18 and the controlling element 20, with reference to the rotation of the shaft 18 in the first direction around the axis C.

The backward movement of the hub 19 with respect to the shaft 18 determines the backward movement of the axis E with respect to the end 22 with reference to the rotation around the axis C.

This determines the variation of the angle of attack α, β, γ of the blades 25 from the first value α to the second value β.

In the following, the teeth 31 of the bushing 30 axially abut against the surfaces 80 of the corresponding projections 35, according to what is illustrated in Figure 6.

In such condition, the hub 19 and the shaft 18 are again angularly integral with one another around the axis C.

When the absolute value of the acceleration a of the shaft 18 exceeds the threshold value Ta, the rings 40 are substantially elastically undeformed so as to be flat and orthogonal to the axis C.

In a further range of values of acceleration a of the shaft 18 not illustrated in Figure 12, the teeth 31 of the controlling element 20 are in abutment against the surfaces 81 of the respective projections 35.

In such condition, the hub 19 and the shaft 18 are again angularly integral with one another around the axis C.

In the following, by way of mere non-limiting example, some strategies for controlling the thrust generated by the rotor 17 are described.

For example, starting from a condition in which the angle of attack α, β, γ is positive - i.e. is such that the rotor 17 generates a thrust in a third direction - and the shaft 18 rotates in the first direction of rotation, it is possible to invert the direction of rotation of the thrust of the rotor 17, reducing the acceleration a of the shaft 18 to a negative value smaller than -Ta. Consequently, the output shaft 18 rotates in the second direction of rotation around the axis C and the hub 19 angularly moves forward with respect to the shaft 18 with reference to the first direction of rotation around the axis C and, therefore, is angularly moved forward with respect to the shaft 18 still with reference to the first direction of rotation around the axis C.

The variation of the angle of attack α, β, γ of the blades 25 up to the second negative value is thus determined, i.e. such that the rotor 17 generates a thrust in a fourth direction opposite the third direction.

Then, the acceleration a of the shaft 18 increases from the negative value up to a positive value smaller than the threshold value Ta, so as to bring the rotational speed ω of the shaft 18 to a positive value, i.e. in accordance with the first direction of rotation, and keep the thrust of the rotor 17 in the fourth direction.

Alternatively, starting from a condition in which the first value of the angle of attack α, β, γ is negative, and the shaft 18 rotates in the second direction of rotation, it is possible to reduce the rotational speed ω of the shaft 18, so as to reduce the aerodynamic forces acting on the blades 25 of the rotor 17.

Then, the acceleration a of the shaft 18 is brought to a value greater than Ta, i.e. in accordance with the first direction of rotation around the axis C, so that the hub 19 moves backward with respect to the controlling element 20 with reference to the aforementioned first direction of rotation.

The variation of the angle of attack α, β, γ of the blades 25 up to the second positive value and the inversion of the thrust generated by the rotor 17 from the third direction of rotation to the fourth direction of rotation are thus determined.

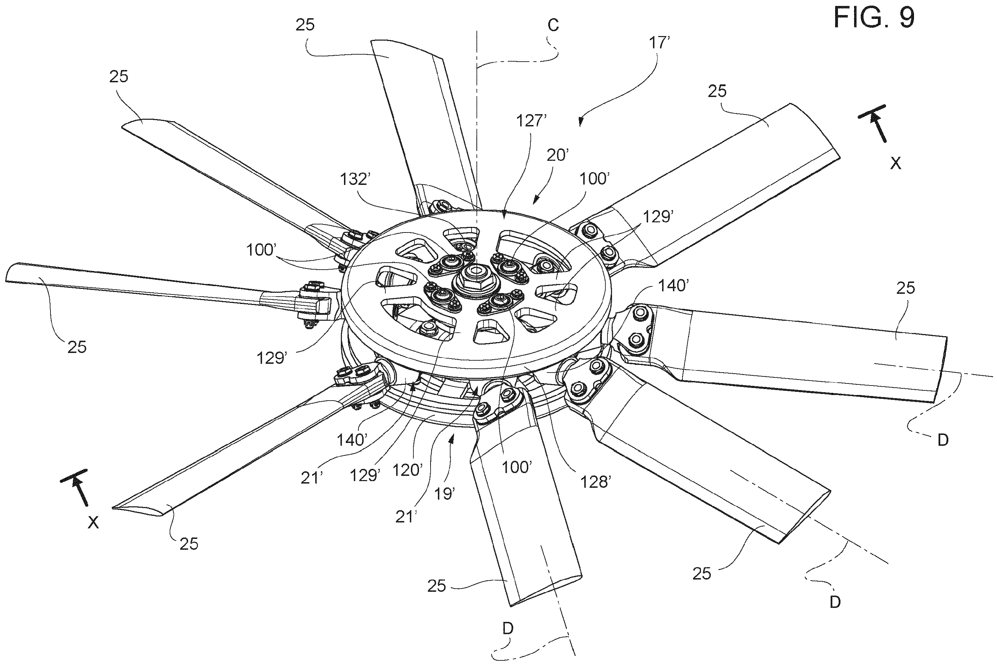

With reference to Figures 9 to 11, reference numeral 17' indicates a rotor according to a different embodiment of the invention.

The rotor 17' is similar to the rotor 17 and will be described in the following only with regard to what differs from the later; identical or equivalent parts of the rotors 17, 17' will be indicated, if possible, by the same reference numerals.

In particular, the rotor 17' differs from the rotor 17 due to the fact that:
- the shaft 18 is angularly integral with the hub 19' around the axis C;
- the moment of inertia of the controlling element 20' is greater than the moment of inertia of the hub 19' with reference to the rotation around the axis C; and
- the controlling element 20' angularly moves backward with respect to the hub 19' with reference to the rotation around the axis C in the first (second) direction, when the threshold value Ta of the acceleration a of the shaft 18 reaches the threshold value Ta.

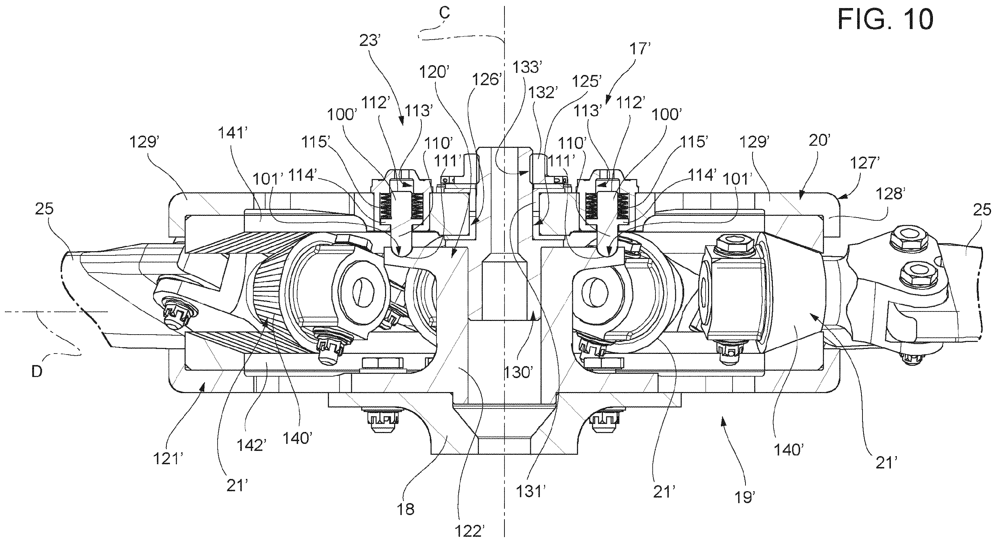

The rotor 17' further differs from the rotor 17 due to the fact that the hub 19' comprises (Figure 10):
- an axial end flange 120' fixed to the shaft 18 and with a bell-shaped body facing the controlling element 20';
- an axial end flange 121' opposite the flange 120'; and
- a tubular body 122' axially interposed between the flanges 120', 121'.

The controlling element 20' is shaped like a flywheel essentially comprising:
- a radially internal circular rim 126' delimiting a hole 125' of axis C;
- a radially external circular rim 127' from which an annular edge 128' protrudes facing the shaft 18; and
- a plurality of spokes 129' radially extending between the circular rims 126', 127'.

The rotor 17' further comprises:
- a tubular element 130' coaxially accommodated inside the tubular body 122', so as to result rotatable around the axis C integrally with the hub 19' and passing through the hole 125' of the controlling element 20' with a radial clearance; and
- a bearing 131' accommodated inside the hole 125' and radially interposed between the tubular element 130' and the tubular body 122'.

The rotor 17' further comprises a nut 132' screwed on a thread 133' of the tubular element 130' arranged at an axial end of the tubular element 130' opposite the shaft 18.

The nut 132' is in axial abutment against the controlling element 20' so as to make the shaft 18 and the controlling element 20' axially integral with one another with respect to the axis C.

Each connection member 21' further comprises a pinion 140' carried by the relative blade 25. In the illustrated case, the pinion 140' is a cone-shaped pinion.

The controlling element 20' further comprises a toothing 141' facing the pinion 140' and meshing with the pinion 140'.

The hub 19' further comprises a toothing 142' carried by the flange 121', facing the pinion 140' and meshing with the pinion 140' on the opposite side of the toothing 141'.

The coupling between the toothings 141', 142' and the relative pinions 140' holds the blades 25 in the correct radial position with respect to the hub 19' against the action of the centrifugal force, thanks to the fact that the hub 19' and the controlling element 20' are axially integral with one another.

When the controlling element 20' and the hub 19' are angularly integral with one another around the axis C in the first and second positions, the coupling between the toothings 141', 142' and the relative pinions 140' determines the rotation of the blades 25 around the axis C integrally with the output shaft 18' and the hub 19'.

When the controlling element 20' rotates with respect to the axis C from the first position to the second position, the pinions 140' rotate around the relative axes D due to the meshing with the toothing 141' consequently varying the angles of attack α, β of the corresponding blades 25.

In other words, the controlling element 20' differs from the controlling element 20 due to the fact of comprising the toothings 141', 142' and the pinions 140'.

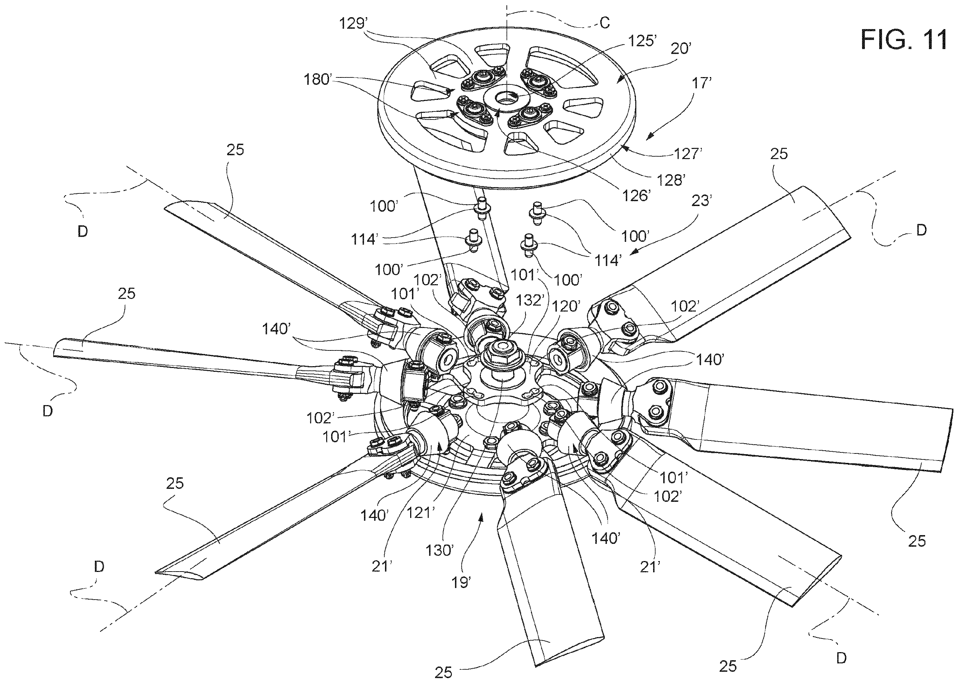

The constraining means 23' differ from the constraining means 23 due to the fact of comprising (Figures 10 and 11):
- a plurality of angularly fixed pins 100' axially movable with respect to the controlling element 20' and with reference to the axis C; and
- a plurality, four in the illustrated case, of pairs of seats 101', 102' defined by the hub 19' and open towards the controlling element 20'.

In particular, the seats 101', 102' are obtained on the flange 120' of the hub 19'.

Each pair of seats 101', 102' is associated with a respective pin 100'.

The pairs of seats 101', 102' are angularly equally spaced apart around the axis C.

The angle between homologous points of the seats 101', 102' of the same pair is smaller than the angle between homologous points of seats 101' (or 102') immediately consecutive with respect to one another, with reference to the axis C.

The seats 101', 102' define respective surfaces 103', 104' shaped as respective hemispheres open towards the controlling element 20.

Each pin 100' comprises, in turn:
- a stem 110' elongated parallel to the axis C;
- an axial end head 111' arranged on the side of the hub 19', shaped like a hemisphere and engaging the respective seat 101', 102';
- an end 112' opposite the head 111' and accommodated inside a respective seat 113' defined by the controlling element 20'; and
- an appendage 114' radially protruding from the stem 110' in a position axially interposed between the respective head 111' and end 112'.

The rotor 17' further comprises a plurality of cup-shaped springs 115', axially interposed between the appendage 114' of the relative pin 100' and the controlling element 20'.

In the illustrated case, the rotor 17' comprises a plurality, four in the illustrated case, of inserts 180' fixed to the controlling element 20' in respective positions angularly equally spaced apart around the axis C. Each insert 180' accommodates a relative pin 100' and the relative spring 115'.

The operation of the rotor 17' is similar to that of the rotor 17 and is described in the following only with regard to what differs from the rotor 17.

In particular, the operation of the rotor 17' differs from the operation of the rotor 17 due to the fact that the shaft 18 drives the hub 19' into rotation around the axis C.

The shaft 18 is further axially integral with the controlling element 20', thanks to the fact that the nut 132' is screwed on the thread 133' of the tubular element 130' and is axially arranged in abutment against the controlling element 20'.

The coupling between the toothings 141', 142' and the relative pinions 140' holds the blades 25 in the correct radial position with respect to the hub 19' against the action of the centrifugal force.

When the absolute value of the acceleration a of the shaft 18 is smaller than the threshold value Ta, the controlling element 20' and the hub 19' are angularly integral with one another around the axis C in the first position, thanks to the fact that the pins 100' are accommodated in the seats 101' and kept inside them by the springs 115'.

More in particular, when the absolute value of the acceleration a is smaller than the threshold value Ta, the controlling element 20' is driven into rotation integrally with the shaft 18 by the torque caused by the friction existing between the pins 100' and the seats 101'.

In such condition, the torque caused by the friction in accordance with the direction of rotation of the shaft 18 around the axis C exceeds the inertia torque acting on the controlling element 20 not in accordance with the aforementioned direction of rotation.

When the absolute value of the acceleration a reaches the threshold value Ta, the inertia torque exceeds the torque caused by the friction.

Consequently, the pins 100' move away parallel to the axis C from the respective seats 101' against the action of the respective springs 115' and once they come out of the seats 101' they move backward integrally with the controlling element 20' with respect to the hub 19' with reference to a rotation around the axis C in the first direction.

The backward movement of the controlling element 20' with respect to the hub 19' determines the backward movement of the toothing 141' with respect to the relative pinions 140', with reference to the rotation around the axis D.

The pinions 140' thus rotate around the relative axes D due to the meshing with the toothing 141' consequently varying the angles of attack α, β of the corresponding blades 25 from the first value to the second value.

Then, the pins 100' are pushed inside the seats 102' by the springs 115'.

In such condition, the controlling element 20 and the shaft 18 are again angularly integral with one another around the axis C.

By examining a rotor 17; 17' according to the present invention, the advantages that the later allows obtaining are evident.

More specifically, the hub 19; 19' and the controlling element 20; 20' of the rotor 17; 17' are angularly integral with one another around the axis C in the first position and in the second position when the value of the acceleration a of the output shaft 18 is smaller than the threshold value Ta, are angularly movable with respect to one another between the first and second positions when the absolute value of the acceleration a reaches and exceeds the threshold value Ta.

In such manner, it is possible to exploit the relative angular shifting between hub 19; 19' and output shaft 18 for varying the angle of attack α, β, γ; α, β of the blades 25 between the first value α and the second value β.

It is thus possible to adjust the rotor 17; 17' so as to generate a first thrust value parallel to the axis C at the first value α of the angle of attack α, β, γ; α, β of the blades 25 and a second thrust value parallel to the axis C at the second value β of the angle of attack α, β, γ; α, β of the blades 25, varying the rotational speed ω of the shaft 18 only for limited time intervals. Alternatively, it is possible to keep the thrust value generated by the rotor 17; 17' constant by varying the rotational speed ω of the shaft 18, unlike the rotor solutions with fixed angles of attack discussed in the introduction of the present description.

Furthermore, the direction of the thrust of the rotor 17; 17' can be easily inverted by simply configuring the connection members 21; 21', so that the first value α of the angle of attack α, β, γ; α, β of the blades 25 is positive (negative) and the second value β of the aforementioned angle of attack α of the blades 25 is negative (positive). It is thus not necessary to invert the direction of rotation of the shaft 18 and consequently exchange the leading edge and the trailing edge of the blades 25.

With reference to the rotor 17, the teeth 31 are kept by the rings 40 in abutment against the surfaces 82, 80 of the corresponding projections 35, when the absolute value of the acceleration a of the shaft 18 is respectively smaller or greater than the threshold value Ta.

With reference to the rotor 17', the pins 100' are kept by the respective springs 115' inside the respective seats 101', 102', when the absolute value of the acceleration a of the shaft 18 is respectively smaller or greater than the threshold value Ta.

In such manner, it is possible to limit the relative angle of rotation between hub 19, 19' and controlling element 20, 20', thus also limiting the variation of the angle of attack α of the blades 25 between the first, second and third values α, β, γ for the rotor 17 or between the first and second values α, β for the rotor 17'.

Finally, the mass of the hub 19 and the mass of the controlling element 20' besides generating the greater first and second moments of inertia respectively around the axis C also have a structural function of supporting the aerodynamic loads acting on the blades 25.

It is thus possible to minimize the mass of the rotor 17; 17' so as to raise the quickness of variation of the angle of attack α, β, γ; α, β between the aforementioned first value α and second value β, simultaneously raising the payload, the total mass of the helicopter 1 at take-off being equal.

It is clear that modifications and variations can be made to the rotors 17, 17' described and illustrated herein without thereby departing from the scope of protection defined by the claims.

In particular, the angles of attack α, β, γ; α, β of the blades 25 of the rotors 17, 17' could assume any number whatsoever, specifically greater than two, of discrete values different from one another.

Furthermore, the rotor 17, 17' could be used in a convertiplane. In such case, the axis C would be inclinable around an axis parallel to a transversal axis of the convertiplane between:
- a position parallel to a longitudinal axis of the convertiplane assumed when the convertiplane is in the "airplane" position; and
- a position parallel to an axis orthogonal to the longitudinal and transversal axes of the convertiplane assumed when the convertiplane is in the "helicopter" position.

Furthermore, the rotor 17, 17' could be used in an aircraft having multiple rotors. In such case, the axis C could be fixed or inclinable so as to allow the aircraft to assume both an "airplane" position and a "helicopter" position.

## Claims

1. An anti-torque rotor (17, 17') for an aircraft (1) capable of hovering, comprising:
- a motor element (16) comprising, in turn, an output shaft (18) rotatable around a first axis (C) and controllable so as to drive said output shaft (18) into rotation with an acceleration (a) selectively adjustable over time;
- a hub (19, 19') rotatable around said first axis (C) and operatively connected to said output shaft (18);
- at least two blades (25) rotatable integrally with said hub (19, 19') around said first axis (C);
- at least two connection members (21, 21') operatively connected to said respective blades (25) and operable to determine the rotation of said respective blades (25) around corresponding second extension axes (D) of the blades (25) transversal to said first axis (C), so as to adjust the angles of attack (α, β, γ; α, β) of said blades (25);
- a controlling element (20, 20') connected to said connection members (21, 21') and rotatable around said first axis (C); and
- constraining means (23, 23') adapted to constrain said hub (19, 19') and controlling element (20, 20') to one another in a movable manner;
said connection members (21, 21') being constrained to said blades (25) and to said controlling element (20, 20') so as to associate the value of said angle of attack (α, β, γ; α, β) with the relative angular position between said hub (19, 19') and said controlling element (20, 20'), with reference to said first axis (C);
**characterized in that** said constraining means (23, 23') are configured to:
- keep said controlling elements and hub (20, 19; 20', 19') angularly integral with one another around said first axis (C) and in at least a first relative position with respect to one another, when the absolute value of said acceleration (a) is smaller, in use, than a threshold value (Ta), so that said angles of attack (α, β, γ; α, β) assume respective first values (α);
- keep said controlling element and hub (20, 19) angularly integral with one another around said first axis (C) and in at least a second relative position with respect to one another angularly spaced apart from said first position, when the absolute value of said acceleration (a) is greater, in use, than a threshold value (Ta), so that said angles of attack (α, β, γ; α, β) assume respective second values (β) different from said first values (α); and
- allow the relative rotation between said controlling element and hub (20, 19; 20', 19') between said first and second positions when the absolute value of said acceleration (a) reaches, in use, said threshold value (Ta);
said output shaft (18) being angularly integral with one (20, 19') of said controlling element (20, 20') and said hub (19, 19');
said one (20, 19') of said controlling element (20, 20') and said hub (19, 19') having a first moment of inertia around said first axis (C);
said other one (19, 20') of said controlling element (20, 20') and said hub (19, 19') having a second moment of inertia around said first axis (C) different from, in particular greater than, said first moment of inertia;
said constraining means (23, 23') comprising:
- at least one projection (31, 100') angularly integral with one (20, 19') of said controlling element (20, 20') and hub (19, 19');
- at least a first surface (80, 101') and a second surface (82, 102') angularly integral with the other one (19, 20') of said controlling element (20, 20') and hub (19, 19');
said first and second surfaces (80, 101'; 82, 102') being angularly spaced apart from one another, proceeding circumferentially to said first axis (C);
said first surface (80, 101') being in abutment against said projection (31, 100'), when said controlling element (20, 20') and hub (19, 19') are in said first position;
said second surface (82, 102') being in abutment against said projection (31, 100'), when said controlling element (20, 20') and hub (19, 19') are in said second position;
said projection (31) rotating angularly with respect to said first and second surfaces (80, 101'; 82, 102'), when said controlling elements (20, 20') and hub (19) are free to rotate with respect to one another.

2. The rotor according to claim 1, **characterized in that** said output shaft (18) is angularly integral with said controlling element (20) around said first axis (C);
said second moment of inertia of said hub (19) being greater than said first moment of inertia of said controlling element (20);
said hub (19) being free to rotate with respect to said output shaft (18), in use, with reference to a direction of rotation of said output shaft (18), during said relative rotation between said first and second positions.

3. The rotor according to claim 2, **characterized in that** it comprises a bushing (30) angularly integral and axially slidable with respect to said output shaft (18) around said first axis (C) and from which said projection (31) protrudes cantilevered parallel to said first axis (C);
said hub (19) defining said first and second surfaces (80, 82), which are axially staggered with respect to one another with reference to said first axis (C).

4. The rotor according to any one of the foregoing claims, **characterized in that** said connection members (21) each comprise a relative lever (21) slidable inside a relative seat (26) of said controlling element (20) and hinged to said corresponding blade (25).

5. The rotor according to any one of claims from 1 to 3, **characterized in that** it comprises elastic means (40) interposed between said bushing (30) and said controlling element (20).

6. The rotor according to any one of the foregoing claims, **characterized in that** said output shaft (18) is angularly integral with said hub (19') around said first axis (C);
said first moment of inertia of said controlling element (20') being greater than said second moment of inertia of said hub (19');
said controlling element (20') being free to rotate, in use, with respect to said output shaft (18), with reference to a direction of rotation of said output shaft (18), during said relative rotation between said first and second positions.

7. The rotor according to any one of claims 1 or 6, when dependent on claim 1, **characterized in that** said hub (19') defines at least a first seat (101', 102') open parallel to said first axis (C) towards said controlling element (20');
said constraining means (23') further comprising:
- at least one pin (100') defining said projection (31, 100') and engaging the first seat (101') defining said first surface (80, 101') when said controlling element (20') and hub (19') are arranged in said first position, and engaging said second seat (102') defining said second surface (102') when said controlling element (20') and hub (19') are arranged, in use, in said second position; and
- elastic means (115') interposed between said controlling element (20') and said pin (100').

8. The rotor according to any one of claims 6 or 7, **characterized in that** said hub (19') comprises a first toothing (141') and said controlling element (20') comprises a second toothing (142');
each blade (25) comprising a toothed pinion (140') simultaneously meshing with said first and second toothings (141', 142');
each connection member (21') comprising said second toothing (142') and said pinion (140') of said relative blade (25);
said hub (19') and said controlling element (20') being axially integral with one another parallel to said first axis (C).

9. The rotor according to any one of claims 1 and from 6 to 8, **characterized in that** said motor element (16) is an electric motor.

10. A helicopter comprising:
- a fuselage (2);
- a main rotor (4) operable to generate a force on said fuselage (2) adapted to support and manoeuvre the helicopter; and
- a plurality of anti-torque rotors (17, 17'), at least one of which is manufactured according to any one of the preceding claims.

11. A method for adjusting the angle of attack (α, β, γ; α, β) of the blades (25) of an anti-torque rotor (17, 17') for an aircraft (1) capable of hovering;
said rotor (17, 17') comprising, in turn:
- a motor element (16) comprising, in turn, an output shaft (18) rotatable around a first axis (C) and controllable so as to drive said output shaft (18) into rotation with an acceleration (a) selectively adjustable over time;
- a hub (19, 19') rotatable around said first axis (C) and operatively connected to said output shaft (18);
- at least two blades (25) rotatable integrally with said hub (19, 19') around said first axis (C);
- at least two connection members (21, 21') operatively connected to respective blades (25) and operable to determine the rotation of said respective blades (25) around said corresponding second extension axes (D) of the blades (25) transversal to said first axis (C), so as to adjust the angles of attack (α, β, γ; α, β) of said blades (25);
- a controlling element (20, 20') connected to said connection members (21, 21') and rotatable around said first axis (C); and
- constraining means (23) adapted to constrain said hub (19, 19') and controlling element (20, 20') to one another in a movable manner;
said method comprisingthe steps of:
i) associating the value of said angles of attack (α, β, γ; α, β) with the relative angular position between said hub (19, 19') and said connection members (21, 21'), with reference to said first axis (C);
ii) keeping said controlling elements and hub (20, 19; 20', 19') angularly integral with one another around said first axis (C) and in at least a first relative position with respect to one another, when the absolute value of said acceleration (a) is smaller, in use, than a threshold value (Ta), so that said angles of attack (α, β, γ; α, β) assume respective first values (α);
said method being **characterized by** comprising the steps of:
iii) keeping said controlling element and hub (20, 19) angularly integral with one another around said first axis (C) and in at least a second relative position with respect to one another angularly spaced apart from said first position, when the absolute value of said acceleration (a) is greater, in use, than a threshold value (Ta), so that said angles of attack (α, β, γ; α, β) assume respective second values (β) different from said first values (α); and
iv) allowing the relative rotation between said controlling element and hub (20, 19; 20', 19') between said first and second positions when the absolute value of said acceleration (a) reaches, in use, said threshold value (Ta);
wherein said output shaft (18) is angularly integral with one (20, 19') of said controlling element (20, 20') *and said hub (19, 19');
said one (20, 19') of said controlling element (20, 20') and said hub (19, 19') having a first moment of inertia around said first axis (C);
said other one (19, 20') of said controlling element (20, 20') and said hub (19, 19') having a second moment of inertia around said first axis (C) different from, in particular greater than, said first moment of inertia;
said constraining means (23, 23') comprising:
- at least one projection (31, 100') angularly integral with one (20, 19') of said controlling element (20, 20') and hub (19, 19');
- at least a first surface (80, 101') and a second surface (82, 102') angularly integral with the other one (19, 20') of said controlling element (20, 20') and hub (19, 19');
said first and second surfaces (80, 101'; 82, 102') being angularly spaced apart from one another, proceeding circumferentially to said first axis (C);
said first surface (80, 101') being in abutment against said projection (31, 100'), when said controlling element (20, 20') and hub (19, 19') are in said first position;
said second surface (82, 102') being in abutment against said projection (31, 100'), when said controlling element (20, 20') and hub (19, 19') are in said second position;
said projection (31) rotating angularly with respect to said first and second surfaces (80, 101'; 82, 102'), when said controlling elements (20, 20') and hub (19) are free to rotate with respect to one another.

12. The method according to claim 11, **characterized in that** step iv) comprises step v) of rotating said hub (19) with respect to said output shaft (18), with reference to a direction of rotation of said output shaft (18) during said step iv);
said connection members (21, 21') each comprising a relative lever (21) movable with respect to said controlling element (20) and hinged to said corresponding blade (25).

13. The method according to claim 11, **characterized in that** step iv) comprises step vi) of rotating said controlling element (20') with respect to said output shaft (18), with reference to a direction of rotation of the output shaft (18);
said hub (19') comprising a first toothing (141') and said controlling element (20') comprising a second toothing (142');
each of said blades (25) comprising a toothed pinion (140') simultaneously meshing with said first and second toothings (141', 142');
each of said connection members (21') comprising said second toothing (142') and said pinion (140') of said relative blade (25);
said hub (19') and said controlling element (20') being axially integral with one another parallel to said first axis (C).

## Patentansprüche

1. Drehmomentausgleichsrotor (17, 17') für ein schwebfähiges Luftfahrzeug (1), der Folgendes umfasst:
- ein Motorelement (16), das seinerseits eine Ausgangswelle (18) umfasst, die um eine erste Achse (C) drehbar ist, und derart steuerbar ist, dass die Ausgangswelle (18) zu einer Drehung mit einer Beschleunigung (a), die im Zeitablauf selektiv einstellbar ist, angetrieben wird;
- eine Nabe (19, 19'), die um die erste Achse (C) drehbar ist und mit der Ausgangswelle (18) betriebstechnisch verbunden ist;
- mindestens zwei Blätter (25), die einteilig mit der Nabe (19, 19') um die erste Achse (C) drehbar sind;
- mindestens zwei Verbindungselemente (21, 21'), die mit den jeweilige Blättern (25) betriebstechnisch verbunden sind und betreibbar sind, die Drehung der jeweiligen Blätter (25) um entsprechende zweite Erstreckungsachsen (D) der Blätter (25), die zur ersten Achse (C) quergerichtet sind, zu bestimmen, um die Anstellwinkel (α, β, γ; α, β) der Blätter (25) einzustellen;
- ein Steuerelement (20, 20'), das mit den Verbindungselementen (21, 21') verbunden ist und um die erste Achse (C) drehbar ist; und
- Spannmittel (23, 23'), die ausgelegt sind, die Nabe (19, 19') und das Steuerelement (20, 20') auf eine bewegliche Weise miteinander einzuspannen;
wobei die Verbindungselemente (21, 21') mit den Blättern (25) und mit dem Steuerelement (20, 20') eingespannt sind, derart, dass der Wert des Anstellwinkels (α, β, γ; α, β) der relativen Winkelposition zwischen der Nabe (19, 19') und dem Steuerelement (20, 20') Bezug nehmend auf die erste Achse (C) zugeordnet wird;
**dadurch gekennzeichnet, dass** die Spannmittel (23, 23') konfiguriert sind zum:
- Halten der Steuerelemente und der Nabe (20, 19; 20', 19') einteilig in Winkelrichtung um die erste Achse (C) und in mindestens einer ersten relativen Position in Bezug aufeinander, wenn der Absolutwert der Beschleunigung (a) im Gebrauch kleiner als ein Schwellenwert (Ta) ist, derart, dass die Anstellwinkel (α, β, γ; α, β) jeweilige erste Werte (α) annehmen;
- Halten des Steuerelements und der Nabe (20, 19) einteilig in Winkelrichtung um die erste Achse (C) und in mindestens einer zweiten relativen Position in Bezug aufeinander, die von der ersten Position in Winkelrichtung beabstandet ist, wenn der Absolutwert der Beschleunigung (a) im Gebrauch größer als ein Schwellenwert (Ta) ist, derart, dass die Anstellwinkel (α, β, γ; α, β) jeweilige zweite Werte (β) annehmen, die von den ersten Werten (α) verschieden sind; und
- Zulassen der relativen Drehung zwischen dem Steuerelement und der Nabe (20, 19; 20', 19') zwischen der ersten und der zweiten Position, wenn der Absolutwert der Beschleunigung (a) im Gebrauch den Schwellenwert (Ta) erreicht;
wobei die Ausgangswelle (18) mit einem (20, 19') des Steuerelements (20, 20') und der Nabe (19, 19') in Winkelrichtung fest verbunden ist;
wobei das eine (20, 19') des Steuerelements (20, 20') und der Nabe (19, 19') ein erstes Trägheitsmoment um die erste Achse (C) aufweist;
wobei das andere (19', 20) des Steuerelements (20, 20') und der Nabe (19, 19') ein zweites Trägheitsmoment um die erste Achse (C) aufweist, das vom ersten Trägheitsmoment verschieden, insbesondere größer als dieses ist;
wobei die Spannmittel (23, 23') Folgendes umfassen:
- mindestens einen Vorsprung (31, 100'), der mit einem (20, 19') des Steuerelements (20, 20') und der Nabe (19, 19') in Winkelrichtung fest verbunden ist;
- mindestens eine erste Fläche (80, 101') und eine zweite Fläche (82, 102'), die mit dem anderen (19, 20') des Steuerelements (20, 20') und der Nabe (19, 19') in Winkelrichtung fest verbunden sind;
wobei die erste und die zweite Fläche (80, 101'; 82, 102') umlaufend um die erste Achse (C) fortschreitend in Winkelrichtung voneinander beabstandet sind;
wobei die erste Fläche (80, 101') an dem Vorsprung (31, 100') anliegt, wenn sich das Steuerelement (20, 20') und die Nabe (19, 19') in der ersten Position befinden;
wobei die zweite Fläche (82, 102') an dem Vorsprung (31, 100') anliegt, wenn sich das Steuerelement (20, 20') und die Nabe (19, 19') in der zweiten Position befinden;
wobei sich der Vorsprung (31) in Bezug auf die erste und die zweite Fläche (80, 101'; 82, 102') in Winkelrichtung dreht, wenn sich die Steuerelemente (20, 20') und die Nabe (19) in Bezug aufeinander frei drehen können.

2. Rotor nach Anspruch 1, **dadurch gekennzeichnet, dass** die Ausgangswelle (18) in Winkelrichtung um die erste Achse (C) mit dem Steuerelement (20) fest verbunden ist;
wobei das zweite Trägheitsmoment der Nabe (19) größer als das erste Trägheitsmoment des Steuerelements (20) ist;
wobei sich die Nabe (19) im Gebrauch bezüglich einer Drehrichtung der Ausgangswelle (18) während der relativen Drehung zwischen der ersten und der zweiten Position in Bezug auf die Ausgangswelle (18) frei drehen kann.

3. Rotor nach Anspruch 2, **dadurch gekennzeichnet, dass** er eine Laufbuchse (30) umfasst, die in Winkelrichtung um die erste Achse (C) fest verbunden und in Bezug auf die Ausgangswelle (18) axial verschiebbar ist und von der der Vorsprung (31) freitragend parallel zur ersten Achse (C) vorsteht;
wobei die Nabe (19) die erste und die zweite Fläche (80, 82) definiert, die Bezug nehmend auf die erste Achse (C) in Bezug aufeinander axial versetzt sind.

4. Rotor nach einem der vorhergehenden Ansprüche, **dadurch gekennzeichnet, dass** die Verbindungselemente (21) jeweils einen zugehörigen Hebel (21) umfassen, der im Inneren einer zugehörigen Aufnahme (26) des Steuerelements (20) verschiebbar ist und mit dem entsprechenden Blatt (25) gelenkig verbunden ist.

5. Rotor nach einem der Ansprüche von 1 bis 3, **dadurch gekennzeichnet, dass** er elastische Mittel (40) umfasst, die zwischen der Laufbuchse (30) und dem Steuerelement (20) eingefügt sind.

6. Rotor nach einem der vorhergehenden Ansprüche, **dadurch gekennzeichnet, dass** die Ausgangswelle (18) in Winkelrichtung um die erste Achse (C) mit der Nabe (19') fest verbunden ist;
wobei das erste Trägheitsmoment des Steuerelements (20') größer als das zweite Trägheitsmoment (19') der Nabe (19') ist;
wobei sich das Steuerelement (20') im Gebrauch bezüglich einer Drehrichtung der Ausgangswelle (18) während der relativen Drehung zwischen der ersten und der zweiten Position in Bezug auf die Ausgangswelle (18) frei drehen kann.

7. Rotor nach einem der Ansprüche 1 oder 6, wenn abhängig von Anspruch 1, **dadurch gekennzeichnet, dass** die Nabe (19') mindestens eine erste Aufnahme (101', 102') definiert, die parallel zur ersten Achse (C) in Richtung des Steuerelements (20') offen ist;
wobei die Spannmittel (23') ferner Folgendes umfassen:
- mindestens einen Bolzen (100'), der den Vorsprung (31, 100') definiert und sich mit der ersten Aufnahme (101'), die die erste Fläche (80, 101') definiert, in Eingriff befindet, wenn das Steuerelement (20') und die Nabe (19') in der ersten Position angeordnet sind, und sich mit der zweiten Aufnahme (102'), die die zweite Fläche (102') definiert, in Eingriff befindet, wenn das Steuerelement (20') und die Nabe (19') im Gebrauch in der zweiten Position angeordnet sind; und
- elastische Mittel (115'), die zwischen dem Steuerelement (20') und dem Bolzen (100') eingefügt sind.

8. Rotor nach einem der Ansprüche 6 oder 7, **dadurch gekennzeichnet, dass** die Nabe (19') eine erste Verzahnung (141') umfasst und das Steuerelement (20') eine zweite Verzahnung (142') umfasst;
wobei jedes Blatt (25) ein Ritzel (140') umfasst, das gleichzeitig mit der ersten und der zweiten Verzahnung (141', 142') kämmt;
wobei das Verbindungselement (21') die zweite Verzahnung (142') und das Ritzel (140') des zugehörigen Blatts (25) umfasst;
wobei die Nabe (19') und das Steuerelement (20') parallel zur ersten Achse (C) axial fest miteinander verbunden sind.

9. Rotor nach einem der Ansprüche 1 und von 6 bis 8, **dadurch gekennzeichnet, dass** das Motorelement (16) ein Elektromotor ist.

10. Helikopter, der Folgendes umfasst:
- einen Rumpf (2);
- einen Hauptrotor (4), der betreibbar ist, eine Kraft auf den Rumpf (2) zu erzeugen, der ausgelegt ist, den Helikopter zu tragen und zu manövrieren; und
- mehrere Drehmomentausgleichsrotoren (17, 17'), wobei mindestens einer davon nach einem der vorhergehenden Ansprüche hergestellt ist.

11. Verfahren zum Einstellen des Anstellwinkels (α, β, γ; α, β) der Blätter (25) eines Drehmomentausgleichsrotors (17, 17') für ein schwebfähiges Luftfahrzeug (1);
wobei der Rotor (17, 17') seinerseits Folgendes umfasst:
- ein Motorelement (16), das seinerseits eine Ausgangswelle (18) umfasst, die um eine erste Achse (C) drehbar ist, und derart steuerbar ist, dass die Ausgangswelle (18) in eine Drehung mit einer Beschleunigung (a), die im Zeitablauf selektiv einstellbar ist, angetrieben wird;
- eine Nabe (19, 19'), die um die erste Achse (C) drehbar ist und mit der Ausgangswelle (18) betriebstechnisch verbunden ist;
- mindestens zwei Blätter (25), die mit der Nabe (19, 19') fest verbunden um die erste Achse (C) drehbar sind;
- mindestens zwei Verbindungselemente (21, 21'), die mit den jeweilige Blättern (25) betriebstechnisch verbunden sind und betreibbar sind, die Drehung der jeweiligen Blätter (25) um die entsprechenden zweiten Erstreckungsachsen (D) der Blätter (25), die zur ersten Achse (C) quergerichtet sind, zu bestimmen, um die Anstellwinkel (α, β, γ; α, β) der Blätter (25) einzustellen;
- ein Steuerelement (20, 20'), das mit den Verbindungselementen (21, 21') verbunden ist und um die erste Achse (C) drehbar ist; und
- Spannmittel (23, 23'), die ausgelegt sind, die Nabe (19, 19') und das Steuerelement (20, 20') auf eine bewegliche Weise miteinander einzuspannen;
wobei das Verfahren die folgenden Schritte umfasst:
i) Zuordnen des Wertes der Anstellwinkel (α, β, γ; α, β) zu einer relativen Winkelposition zwischen der Nabe (19, 19') und den Verbindungselementen (21, 21') Bezug nehmend auf die erste Achse (C);
ii) Halten der Steuerelemente und der Nabe (20, 19; 20', 19') in Winkelrichtung um die erste Achse (C) fest miteinander verbunden und in mindestens einer ersten relativen Position in Bezug aufeinander, wenn der Absolutwert der Beschleunigung (a) im Gebrauch kleiner als ein Schwellenwert (Ta) ist, derart, dass die Anstellwinkel (α, β, γ; α, β) jeweilige erste Winkel (α) annehmen;
wobei das Verfahren **dadurch gekennzeichnet ist, dass** es die folgenden Schritte umfasst:
iii) Halten des Steuerelements und der Nabe (20, 19) in Winkelrichtung um die erste Achse (C) fest miteinander verbunden und in mindestens einer zweiten relativen Position in Bezug aufeinander, die von der ersten Position in Winkelrichtung beabstandet ist, wenn der Absolutwert der Beschleunigung (a) im Gebrauch größer als ein Schwellenwert (Ta) ist, derart, dass die Anstellwinkel (α, β, γ; α, β) jeweilige zweite Werte (β) annehmen, die von den ersten Werten (α) verschieden sind; und
iv) Zulassen der relativen Drehung zwischen dem Steuerelement und der Nabe (20, 19; 20', 19') zwischen der ersten und der zweiten Position, wenn der Absolutwert der Beschleunigung (a) im Gebrauch den Schwellenwert (Ta) erreicht;
wobei die Ausgangswelle (18) mit einem (20, 19') des Steuerelements (20, 20') und der Nabe (19, 19') in Winkelrichtung fest verbunden ist;
wobei das eine (20, 19') des Steuerelements (20, 20') und der Nabe (19, 19') ein erstes Trägheitsmoment um die erste Achse (C) aufweist;
wobei das andere (19', 20) des Steuerelements (20, 20') und der Nabe (19, 19') ein zweites Trägheitsmoment um die erste Achse (C) aufweist, das vom ersten Trägheitsmoment verschieden, insbesondere größer als dieses, ist;
wobei die Spannmittel (23, 23') Folgendes umfassen:
- mindestens einen Vorsprung (31, 100'), der mit einem (20, 19') des Steuerelements (20, 20') und der Nabe (19, 19') in Winkelrichtung fest verbunden ist;
mindestens eine erste Fläche (80, 101') und eine zweite Fläche (82, 102'), die mit dem anderen (19, 20') des Steuerelements (20, 20') und der Nabe (19, 19') in Winkelrichtung fest verbunden sind;
wobei die erste und die zweite Fläche (80, 101'; 82, 102') umlaufend um die erste Achse (C) fortschreitend in Winkelrichtung voneinander beabstandet sind;
wobei die erste Fläche (80, 101') an dem Vorsprung (31, 100') anliegt, wenn sich das Steuerelement (20, 20') und die Nabe (19, 19') in der ersten Position befinden;
wobei die zweite Fläche (82, 102') an dem Vorsprung (31, 100') anliegt, wenn sich das Steuerelement (20, 20') und die Nabe (19, 19') in der zweiten Position befinden;
wobei sich der Vorsprung (31) in Bezug auf die erste und die zweite Fläche (80, 101'; 82, 102') in Winkelrichtung dreht, wenn sich die Steuerelemente (20, 20') und die Nabe (19) in Bezug aufeinander frei drehen können.

12. Verfahren nach Anspruch 11, **dadurch gekennzeichnet, dass** der Schritt iv) den Schritt v) des Drehens der Nabe (19) in Bezug auf die Ausgangswelle (18) Bezug nehmend auf eine Drehrichtung der Ausgangswelle (18) während des Schrittes iv) umfasst;
wobei die Verbindungselemente (21, 21') jeweils einen zugehörigen Hebel (21) umfassen, der in Bezug auf das Steuerelement (20) beweglich ist und mit dem entsprechenden Blatt (25) gelenkig verbunden ist.

13. Verfahren nach Anspruch 11, **dadurch gekennzeichnet, dass** der Schritt iv) den Schritt vi) des Drehens des Steuerelements (20') in Bezug auf die Ausgangswelle (18) Bezug nehmend auf eine Drehrichtung der Ausgangswelle (18) umfasst;
wobei die Nabe (19') eine erste Verzahnung (141') umfasst und das Steuerelement (20') eine zweite Verzahnung (142') umfasst;
wobei jedes der Blätter (25) ein Ritzel (140') umfasst, das gleichzeitig mit der ersten und der zweiten Verzahnung (141', 142') kämmt;
wobei jedes der Verbindungselemente (21') die zweite Verzahnung (142') und das Ritzel (140') des zugehörigen Blatts (25) umfasst;
wobei die Nabe (19') und das Steuerelement (20') parallel zur ersten Achse (C) axial fest miteinander verbunden sind.

## Revendications

1. Rotor (17, 17') anticouple pour un aéronef (1) capable de faire du surplace, comprenant :
- un élément moteur (16) comprenant, à son tour, un arbre de sortie (18) rotatif autour d'un premier axe (C) et commandable de façon à entraîner ledit arbre de sortie (18) en rotation avec une accélération (a) ajustable de manière sélective au fil du temps ;
- un moyeu (19, 19') rotatif autour dudit premier axe (C) et relié de manière fonctionnelle audit arbre de sortie (18) ;
- au moins deux pales (25) rotatives d'un seul bloc avec ledit moyeu (19, 19') autour dudit premier axe (C) ;
- au moins deux organes de liaison (21, 21') reliés de manière fonctionnelle auxdites pales (25) respectives et utilisables pour déterminer la rotation desdites pales (25) respectives autour de seconds axes d'extension (D) correspondants des pales (25) transversaux audit premier axe (C), de façon à ajuster les angles d'attaque (α, β, γ ; α, β) desdites pales (25) ;
- un élément de commande (20, 20') relié auxdits organes de liaison (21, 21') et rotatif autour dudit premier axe (C) ; et
- des moyens de contrainte (23, 23') adaptés pour contraindre ledit moyeu (19, 19') et ledit élément de commande (20, 20') l'un par rapport à l'autre d'une manière mobile ;
lesdits organes de liaison (21, 21') étant contraints par rapport auxdites pales (25) et audit élément de commande (20, 20') de façon à associer la valeur dudit angle d'attaque (α, β, γ ; α, β) à la position angulaire relative entre ledit moyeu (19, 19') et ledit élément de commande (20, 20'), en référence audit premier axe (C) ;
**caractérisé en ce que** lesdits moyens de contrainte (23, 23') sont configurés pour :
- maintenir lesdits éléments de commande et moyeu (20, 19 ; 20', 19') angulairement d'un seul bloc les uns avec les autres autour dudit premier axe (C) et dans au moins une première position relative les uns par rapport aux autres, lorsque la valeur absolue de ladite accélération (a) est inférieure, en utilisation, à une valeur seuil (Ta), de façon à ce que lesdits angles d'attaque (α, β, γ ; α, β) adoptent des premières valeurs (α) respectives ;
- maintenir lesdits élément de commande et moyeu (20, 19) angulairement d'un seul bloc l'un avec l'autre autour dudit premier axe (C) et dans au moins une seconde position relative l'un par rapport à l'autre espacée angulairement de ladite première position, lorsque la valeur absolue de ladite accélération (a) est supérieure, en utilisation, à une valeur seuil (Ta), de façon à ce que lesdits angles d'attaque (α, β, γ ; α, β) adoptent des secondes valeurs (β) respectives différentes desdites premières valeurs (α) ; et
- permettre la rotation relative entre lesdits élément de commande et moyeu (20, 19 ; 20', 19') entre lesdites première et seconde positions lorsque la valeur absolue de ladite accélération (a) atteint, en utilisation, ladite valeur seuil (Ta) ;
ledit arbre de sortie (18) étant angulairement d'un seul bloc avec un (20, 19') parmi ledit élément de commande (20, 20') et ledit moyeu (19, 19') ;
ledit un (20, 19') parmi ledit élément de commande (20, 20') et ledit moyeu (19, 19') ayant un premier moment d'inertie autour dudit premier axe (C) ;
ledit autre (19, 20') parmi ledit élément de commande (20, 20') et ledit moyeu (19, 19') ayant un second moment d'inertie autour dudit premier axe (C) différent dudit, en particulier supérieur audit, premier moment d'inertie ;
lesdits moyens de contrainte (23, 23') comprenant :
- au moins une saillie (31, 100') angulairement d'un seul bloc avec un (20, 19') parmi ledit élément de commande (20, 20') et ledit moyeu (19, 19') ;
- au moins une première surface (80, 101') et une seconde surface (82, 102') angulairement d'un seul bloc avec l'autre (19, 20') parmi ledit élément de commande (20, 20') et ledit moyeu (19, 19') ;
lesdites première et seconde surfaces (80, 101' ; 82, 102') étant espacées angulairement l'une de l'autre, se prolongeant de manière circonférentielle jusqu'audit premier axe (C) ;
ladite première surface (80, 101') étant en butée contre ladite saillie (31, 100'), lorsque ledit élément de commande (20, 20') et ledit moyeu (19, 19') sont dans ladite première position ;
ladite seconde surface (82, 102') étant en butée contre ladite saillie (31, 100'), lorsque ledit élément de commande (20, 20') et ledit moyeu (19, 19') sont dans ladite seconde position ;
ladite saillie (31) tournant angulairement par rapport auxdites première et seconde surfaces (80, 101' ; 82, 102'), lorsque lesdits éléments de commande (20, 20') et ledit moyeu (19) sont libres de tourner les uns par rapport aux autres.

2. Rotor selon la revendication 1, **caractérisé en ce que** ledit arbre de sortie (18) est angulairement d'un seul bloc avec ledit élément de commande (20) autour dudit premier axe (C) ;
ledit second moment d'inertie dudit moyeu (19) étant supérieur audit premier moment d'inertie dudit élément de commande (20) ;
ledit moyeu (19) étant libre de tourner par rapport audit arbre de sortie (18), en utilisation, en référence à une direction de rotation dudit arbre de sortie (18), durant ladite rotation relative entre lesdites première et seconde positions.

3. Rotor selon la revendication 2, **caractérisé en ce qu'**il comprend une douille (30) angulairement d'un seul bloc et pouvant coulisser axialement par rapport audit arbre de sortie (18) autour dudit premier axe (C) et de laquelle ladite saillie (31) dépasse en porte-à-faux parallèlement audit premier axe (C) ;
ledit moyeu (19) définissant lesdites première et seconde surfaces (80, 82), qui sont axialement décalées l'une par rapport à l'autre en référence audit premier axe (C).

4. Rotor selon l'une quelconque des revendications précédentes, **caractérisé en ce que** lesdits organes de liaison (21) comprennent chacun un levier (21) relatif pouvant coulisser à l'intérieur d'un siège (26) relatif dudit élément de commande (20) et articulé sur ladite pale (25) correspondante.

5. Rotor selon l'une quelconque des revendications 1 à 3, **caractérisé en ce qu'**il comprend des moyens élastiques (40) interposés entre ladite douille (30) et ledit élément de commande (20).

6. Rotor selon l'une quelconque des revendications précédentes, **caractérisé en ce que** ledit arbre de sortie (18) est angulairement d'un seul bloc avec ledit moyeu (19') autour dudit premier axe (C) ;
ledit premier moment d'inertie dudit élément de commande (20') étant supérieur audit second moment d'inertie dudit moyeu (19') ;
ledit élément de commande (20') étant libre de tourner, en utilisation, par rapport audit arbre de sortie (18), en référence à une direction de rotation dudit arbre de sortie (18), durant ladite rotation relative entre lesdites première et seconde positions.

7. Rotor selon l'une quelconque de la revendication 1 ou de la revendication 6 lorsqu'elle dépend de la revendication 1, **caractérisé en ce que** ledit moyeu (19') définit au moins un premier siège (101', 102') ouvert parallèlement audit premier axe (C) vers ledit élément de commande (20') ;
lesdits moyens de contrainte (23') comprenant en outre :
- au moins une goupille (100') définissant ladite saillie (31, 100') et venant en prise avec le premier siège (101') définissant ladite première surface (80, 101') lorsque ledit élément de commande (20') et ledit moyeu (19') sont agencés dans ladite première position, et venant en prise avec ledit second siège (102') définissant ladite seconde surface (102') lorsque ledit élément de commande (20') et ledit moyeu (19') sont agencés, en utilisation, dans ladite seconde position ; et
- des moyens élastiques (115') interposés entre ledit élément de commande (20') et ladite goupille (100').

8. Rotor selon l'une quelconque des revendications 6 ou 7, **caractérisé en ce que** ledit moyeu (19') comprend une première denture (141') et ledit élément de commande (20') comprend une seconde denture (142') ;
chaque pale (25) comprenant un pignon denté (140') s'engrenant simultanément avec lesdites première et seconde dentures (141', 142') ;
chaque organe de liaison (21') comprenant ladite seconde denture (142') et ledit pignon (140') de ladite pale (25) relative ;
ledit moyeu (19') et ledit élément de commande (20') étant axialement d'un seul bloc l'un avec l'autre parallèlement audit premier axe (C).

9. Rotor selon l'une quelconque des revendications 1 et 6 à 8, **caractérisé en ce que** ledit élément moteur (16) est un moteur électrique.

10. Hélicoptère comprenant :
- un fuselage (2) ;
- un rotor principal (4) utilisable pour générer une force sur ledit fuselage (2) adapté pour supporter et manœuvrer l'hélicoptère ; et
- une pluralité de rotors (17, 17') anticouple, dont au moins un est fabriqué selon l'une quelconque des revendications précédentes.

11. Méthode pour ajuster l'angle d'attaque (α, β, γ ; α, β) des pales (25) d'un rotor (17, 17') anticouple pour un aéronef (1) capable de faire du surplace ;
ledit rotor (17, 17') comprenant, à son tour :
- un élément moteur (16) comprenant, à son tour, un arbre de sortie (18) rotatif autour d'un premier axe (C) et commandable de façon à entraîner ledit arbre de sortie (18) en rotation avec une accélération (a) ajustable de manière sélective au fil du temps ;
- un moyeu (19, 19') rotatif autour dudit premier axe (C) et relié de manière fonctionnelle audit arbre de sortie (18) ;
- au moins deux pales (25) rotatives d'un seul bloc avec ledit moyeu (19, 19') autour dudit premier axe (C) ;
- au moins deux organes de liaison (21, 21') reliés de manière fonctionnelle à des pales (25) respectives et utilisables pour déterminer la rotation desdites pales (25) respectives autour desdits seconds axes d'extension (D) correspondants des pales (25) transversaux audit premier axe (C), de façon à ajuster les angles d'attaque (α, β, γ ; α, β) desdites pales (25) ;
- un élément de commande (20, 20') relié auxdits organes de liaison (21, 21') et rotatif autour dudit premier axe (C) ; et
- des moyens de contrainte (23) adaptés pour contraindre ledit moyeu (19, 19') et ledit élément de commande (20, 20') l'un par rapport à l'autre d'une manière mobile ;
ladite méthode comprenant les étapes consistant à :
i) associer la valeur desdits angles d'attaque (α, β, γ ; α, β) à la position angulaire relative entre ledit moyeu (19, 19') et lesdits organes de liaison (21, 21'), en référence audit premier axe (C) ;
ii) maintenir lesdits éléments de commande et moyeu (20, 19 ; 20', 19') angulairement d'un seul bloc les uns avec les autres autour dudit premier axe (C) et dans au moins une première position relative les uns par rapport aux autres, lorsque la valeur absolue de ladite accélération (a) est inférieure, en utilisation, à une valeur seuil (Ta), de façon à ce que lesdits angles d'attaque (α, β, γ ; α, β) adoptent des premières valeurs (α) respectives ;
ladite méthode étant **caractérisée en ce qu'**elle comprend les étapes consistant à :
iii) maintenir lesdits élément de commande et moyeu (20, 19) angulairement d'un seul bloc l'un avec l'autre autour dudit premier axe (C) et dans au moins une seconde position relative l'un par rapport à l'autre espacée angulairement de ladite première position, lorsque la valeur absolue de ladite accélération (a) est supérieure, en utilisation, à une valeur seuil (Ta), de façon à ce que lesdits angles d'attaque (α, β, γ ; α, β) adoptent des secondes valeurs (β) respectives différentes desdites premières valeurs (α) ; et
iv) permettre la rotation relative entre lesdits élément de commande et moyeu (20, 19 ; 20', 19') entre lesdites première et seconde positions lorsque la valeur absolue de ladite accélération (a) atteint, en utilisation, ladite valeur seuil (Ta) ;
dans laquelle ledit arbre de sortie (18) est angulairement d'un seul bloc avec un (20, 19') parmi ledit élément de commande (20, 20') et ledit moyeu (19, 19') ;
ledit un (20, 19') parmi ledit élément de commande (20, 20') et ledit moyeu (19, 19') ayant un premier moment d'inertie autour dudit premier axe (C) ;
ledit autre (19, 20') parmi ledit élément de commande (20, 20') et ledit moyeu (19, 19') ayant un second moment d'inertie autour dudit premier axe (C) différent dudit, en particulier supérieur audit, premier moment d'inertie ;
lesdits moyens de contrainte (23, 23') comprenant :
- au moins une saillie (31, 100') angulairement d'un seul bloc avec un (20, 19') parmi ledit élément de commande (20, 20') et ledit moyeu (19, 19') ;
- au moins une première surface (80, 101') et une seconde surface (82, 102') angulairement d'un seul bloc avec l'autre (19, 20') parmi ledit élément de commande (20, 20') et ledit moyeu (19, 19') ;
lesdites première et seconde surfaces (80, 101' ; 82, 102') étant espacées angulairement l'une de l'autre, se prolongeant de manière circonférentielle jusqu'audit premier axe (C) ;
ladite première surface (80, 101') étant en butée contre ladite saillie (31, 100'), lorsque ledit élément de commande (20, 20') et ledit moyeu (19, 19') sont dans ladite première position ;
ladite seconde surface (82, 102') étant en butée contre ladite saillie (31, 100'), lorsque ledit élément de commande (20, 20') et ledit moyeu (19, 19') sont dans ladite seconde position ;
ladite saillie (31) tournant angulairement par rapport auxdites première et seconde surfaces (80, 101' ; 82, 102'), lorsque lesdits éléments de commande (20, 20') et ledit moyeu (19) sont libres de tourner les uns par rapport aux autres.

12. Méthode selon la revendication 11, **caractérisée en ce que** l'étape iv) comprend l'étape v) consistant à faire tourner ledit moyeu (19) par rapport audit arbre de sortie (18), en référence à une direction de rotation dudit arbre de sortie (18) durant ladite étape iv) ;
lesdits organes de liaison (21, 21') comprenant chacun un levier (21) relatif mobile par rapport audit élément de commande (20) et articulé sur ladite pale (25) correspondante.

13. Méthode selon la revendication 11, **caractérisée en ce que** l'étape iv) comprend l'étape vi) consistant à faire tourner ledit élément de commande (20') par rapport audit arbre de sortie (18), en référence à une direction de rotation de l'arbre de sortie (18) ;
ledit moyeu (19') comprenant une première denture (141') et ledit élément de commande (20') comprenant une seconde denture (142') ;
chacune desdites pales (25) comprenant un pignon denté (140') s'engrenant simultanément avec lesdites première et seconde dentures (141', 142') ;
chacun desdits organes de liaison (21') comprenant ladite seconde denture (142') et ledit pignon (140') de ladite pale (25) relative ;
ledit moyeu (19') et ledit élément de commande (20') étant axialement d'un seul bloc l'un avec l'autre parallèlement audit premier axe (C).
